# EUROPÄISCHE PATENTSCHRIFT

(11) **EP 3 813 188 B1**
(45) Veröffentlichungstag und Bekanntmachung des Hinweises auf die Patenterteilung: **14.01.2026**
(21) Anmeldenummer: 19205063.1
(22) Anmeldetag: 24.10.2019
(51) Int. Cl.: H01P 1/02, H01P 5/08, H01Q 1/22, H01Q 13/06, H01Q 19/08

(54) **HOHLLEITERANORDNUNG UND ANTENNE**
WAVEGUIDE ARRANGEMENT AND ANTENNA
AGENCEMENT DE GUIDE D'ONDES ET ANTENNE

(43) Veröffentlichungstag der Anmeldung: 28.04.2021
(73) Patentinhaber: VEGA Grieshaber KG, 77709 Wolfach (DE)
(72) Erfinder: BAUR, Roland, 78126 Königsfeld (DE); WÄLDE, Steffen, 78078 Niedereschach (DE)
(74) Vertreter: Maiwald GmbH

(56) Entgegenhaltungen:
- EP-A1- 0 669 673
- EP-A2- 1 014 470
- JP-A- 2004 120 792
- JP-A- H05 235 603
- US-A- 2 758 287
- US-A- 2 961 658
- US-A1- 2002 030 632
- US-A1- 2008 068 112
- KOUKI F ET AL: "Miniature ceramic horn antenna for a high data rates wireless communications systems at 60GHz", ANTENNA TECHNOLOGY AND APPLIED ELECTROMAGNETICS (ANTEM), 2012 15TH INTERNATIONAL SYMPOSIUM ON, IEEE, 25 June 2012 (2012-06-25), pages 1 - 4, XP032219677, ISBN: 978-1-4673-0290-6, DOI: 10.1109/ANTEM.2012.6262388
- DELOS B. CHURCHILL: "WAVEGUIDE WINDOWS FOR HIGH-POWER MICROWAVE TUBES", IEEE INTERNATIONAL CONVERTION RECORD,, vol. 11, 25 March 1963 (1963-03-25), pages 154 - 161, XP001402167

## Beschreibung

### Gebiet der Erfindung

Die Erfindung betrifft eine Hohlleiteranordnung zum Leiten von elektromagnetischen Wellen und eine Antenne für ein 3D-Radargerät zur Erfassung von Schüttguttopologien aufweisend eine solche Hohlleiteranordnung.

### Hintergrund der Erfindung

Elektromagnetische Wellen im GHz-Bereich werden üblicherweise von der Platine über koaxiale Steckverbinder oder direkt über einen Koppelstift in einen RechteckHohlleiter ausgekoppelt. Die Verbindung des IC mit dem Hohlleiter wird mittels einer Streifenleitung auf einem Quarz-Substrat hergestellt, welches auf der einen Seite ein den Hohlleiter anregendes Patch aufweist und auf der anderen Seite mit Hilfe einer Bonddrahtverbindung an den IC angebunden wird. Alternativ wird das den Hohlleiter anregende Patch direkt auf den IC integriert, somit ist keine Bonddrahtverbindung erforderlich. Das offene Hohlleiterende eines mit dieser Technologie gefertigten Radar- oder Kommunikationsmoduls kann mit der Anbringung einer Hornantenne betrieben werden. Eine rotationssymmetrische Antenne wird jedoch von einem Rundhohlleiter gespeist, so dass ein Übergang von dem Rechteckhohlleiter zu dem Rundhohlleiter notwendig ist. Durch den Übergang entstehen Einfügungs- und Dämpfungsverluste.

Der Übergang vom ungefüllten Rechteckhohlleiter in einen im 90°-Winkel stehenden mit Dielektrikum gefüllten Rundhohlleiter erfordert eine geeignete Einkopplung.

Die Druckschriften EP 1 014 470 A2 und JP 2004 120792 A beschreiben jeweils eine Anordnung mit einem Dielektrikum, das von leitenden Platten umgeben ist, und das in einen Rundhohlleiter hineinragt. Die Druckschrift US 2002/030632 A1 beschreibt eine dreidimensionale dielektrische Multi-Apertur-Antenne mit extrem breiter Bandbreite, die die Eigenschaften von konischen dielektrischen Stabantennen und koaxialen Wellenleiter-Übertragungsleitungen kombiniert. Die Druckschrift US 2 961 658 A beschreibt eine steuerbare Leckwellenantenne, die als eine von einem Rechteckhohlleiter seriengespeiste Gruppenantenne aus dielektrischen Stabstrahlern ausgebildet ist, wobei zwischen den Stabstrahlern reflektive Phasenschieber angeordnet sind, die als mit einem dielektrischen Ferritmaterial gefüllte kurzgeschlossene Rundhohlleiter ausgebildet sind. Die Veröffentlichung Delos B. Churchill: "Waveguide Windows for High-Power Microwave Tubes", IEEE International Convention Record, Bd. 11, 25. März 1963, Seiten 154-161 beschreibt ein konvex geformtes dielektrisches Fenster, das von einer stirnseitigen Rundhohlleiteröffnung aus in einen Rechteckhohlleiter hineinragt.

### Zusammenfassung der Erfindung

Aufgabe der Erfindung ist es, einen effektiven Übergang von einem Rechteckhohlleiter zu dem Rundhohlleiter zu schaffen.

Die Aufgabe wird durch die Gegenstände der unabhängigen Patentansprüche gelöst. Vorteilhafte Ausführungsformen sind Gegenstand der abhängigen Ansprüche, der folgenden Beschreibung, sowie der Figuren.

Gemäß einem ersten Aspekt wird eine Hohlleiteranordnung zum Leiten von elektromagnetischen Wellen bereitgestellt, die einen Rechteckhohlleiter und einen Rundhohlleiter aufweist. Der Rechteckhohlleiter geht in einem Winkel, z.B. einem 90° Winkel, in den Rundhohlleiter über. Der Rundhohlleiter ist mit einem Dielektrikum gefüllt, das in einem Übergangsabschnitt in den Rechteckhohlleiter hineinragt. Die dielektrische Füllung ist in dem Übergangsabschnitt in einem definierten Winkel abgeschrägt, so dass eine Übergangsfläche gebildet wird, die um den definierten Winkel gegenüber der Fläche der Rundhohlleiteröffnung inkliniert ist und den Winkel des Übergangs vom Rechteckhohlleiter in den Rundhohlleiter, z.B. einen 90°-Winkel, teilt.

Die elektromagnetische, hochfrequente Welle wird somit vom Einspeisepunkt über den Rechteckhohlleiter zum Rundhohlleiter geführt und trifft vor dem Eintritt in den Rundhohlleiter auf eine abgeschrägte Übergangsfläche des Dielektrikum-Materials, mit dem der Rundhohlleiter gefüllt ist und das aus diesem mit dieser Abschrägung in den Rechteckhohlleiter hineinragt. Durch die Abschrägung werden Reflexionen vermindert. Damit wird ein verlustarmer, d.h. reflexionsarmer und dämpfungsarmer Übergang realisiert. Hierdurch wiederum werden sog. Pseudo-Echos im Radarsignal vermieden oder zumindest verringert, die an der Oberfläche des Übergangs auftreten und die Messung verfälschen können.

Durch die Verwendung eines Dielektrikums wird die Anordnung platzsparend, da hierdurch die Breite der Gesamtanordnung kleiner sein kann als die halbe Wellenlänge des maximalen Arbeitsfrequenzbereiches, wie es ohne einem Dielektrikum-Füllmaterial, d.h., bezogen auf Luft, der Fall wäre.

Gemäß einer weiteren Ausführungsform liegt der Winkel der Abschrägung vorzugsweise zwischen 20° und 40°. In diesem Bereich ergeben sich vorteilhafte Werte bezüglich der Einfügungsdämpfung und der Anpassung. Ein sehr gutes Ergebnis wurde z.B. mit einem Winkel für die Abschrägung von 36° erreicht. Das abgeschrägte Ende des Dielektrikums ragt hierbei zu 40,4% in den Rechteckhohlleiter hinein. In dem Falle, dass der Rundhohlleiter in einem anderen Winkel als 90° zu dem Rechteckhohlleiter steht, können andere Winkel der Abschrägung optimal sein.

Gemäß einer Ausführungsform weist die dielektrische Füllung an dem Übergangsabschnitt mit dem Rechteckhohlleiter gegenüberliegenden Ende des Rundhohlleiters eine Linse auf. Die Linse ragt zumindest teilweise aus dem Rundhohlleiter an der dem freien Raum zugewandten Seite der dielektrischen Füllung heraus und ermöglicht, dass die elektromagnetische Welle reflexionsarm aus dem Hohlleiter austreten und abgestrahlt werden kann.

Gemäß einer weiteren Ausführungsform weist die Linse an dem Übergangsabschnitt mit dem Rechteckhohlleiter gegenüberliegenden Ende, also an der zum Rundhohlleiter zugewandten Seite, umfangseitig einen kleinen Absatz bzw. Vorsprung auf, mit dem sie sich auf dem Ende des Rundhohlleiters abstützt bzw. an dem sie aufsteht. Dadurch wird eine exakte Eindringtiefe in den Rechteckhohlleiter definiert.

Gemäß einer weiteren Ausführungsform weist das Dielektrikum zur Definition der exakten Eindringtiefe entlang der Stirnseite des Rechteckhohlleiters eine Verlängerung auf, wobei die Stirnseite des Rechteckhohlleiters die verlängerte Seite des Rundhohlleiters in den Rechteckhohlleiter hinein ist, so dass das Dielektrikum z.B. im montierten Zustand an der der Rundhohlleiteröffnung am Übergang gegenüberliegenden Seite aufsteht bzw. anschlägt. Da das Dielektrikum, z.B. das Polyetheretherketon-Material, nur entlang der Stirnseite verlängert wird, also nicht in der gesamten Breite bzw. mit gesamten Umfang weitergeführt wird, verbleibt eine ausreichend große freie, abgeschrägte Übergangsfläche die die Hohlleiterwelle aufnehmen und in den Rundhohlleiter hineinleiten kann, ohne die Einfügungsdämpfung wesentlich zu dämpfen. Auf diese Ausführungsform kann beispielsweise zurückgegriffen werden, wenn das Dielektrikum keine Linse aufweist, oder wenn die Linse keinen umlaufenden Absatz aufweist. Ferner sind auch beide Varianten gleichzeitig möglich.

Gemäß einer weiteren Ausführungsform steht der Rundhohlleiter auf der schmalen Seite des Rechteckhohlleiters. Der Rechteckhohlleiter wird somit in der H-Ebene der elektromagnetischen Wellenausbreitung durch den Rundhohlleiter kontaktiert, so dass das Signal über die H-Ebene, also über die schmale bzw. flache Seite des Rechteckhohlleiters in den Rundhohlleiter eingekoppelt wird. Wird die Hohlleiteranordnung für ein Antennenarray mit mehreren Hohlleiteranordnungen verwendet, ist für die Breite der einzelnen Hohlleiteranordnungen die Breite der schmalen Seite des Rechteckhohlleiters maßgeblich, wie unten anhand der Zeichnungen nochmals erläutert und veranschaulicht wird. Diese Ausführungsform stellt eine weitere Maßnahme dar, um die Hohlleiteranordnung und damit aber auch ein Antennenarray platzsparend zu gestalten. Technisch möglich ist zwar auch eine Kontaktierung des Rechteckhohlleiters in der E-Ebene der elektromagnetischen Wellenausbreitung durch den Rundhohlleiter, jedoch wird durch die Einkoppelung des Signals über die breite Seite des Rechteckhohlleiters die Anordnung breiter. Die relative Permittivität der dielektrischen Füllung liegt gemäß einer weiteren Ausführungsform zwischen 2 und 15. Diese Werte haben sich als besonders vorteilhaft in Bezug auf die Wellenausbreitung und hinsichtlich der Wellenlänge des Arbeitsspektrums im Verhältnis zu den Maßen der Hohlleiter herausgestellt. Die dielektrische Füllung kann ferner eine inhomogene Permittivität aufweisen.

Gemäß einer weiteren Ausführungsform besteht die dielektrische Füllung aus dem Material Polyetheretherketon (PEEK), welches durch seine Schmelztemperatur, die bei etwa 335° liegt, auch bei hohen Temperaturen bis ca. 250° C angewendet werden kann und wodurch die elektromagnetischen Wellen verlustarm geleitet werden können.

Gemäß einer weiteren Ausführungsform besteht die dielektrische Füllung aus dem Material Polytetrafluorethylen (PTFE), welches ebenfalls eine hohe Schmelztemperatur und noch geringere Verluste bei der Leitung der elektromagnetischen Welle aufweist. Aufgrund seiner hohen Ausdehnung bei hohen Temperaturen ist je nach Anwendung abzuwägen, welcher Kunststoff der Geeignetste ist. Auch eine Kombination aus PEEK und PTFE kann verwendet werden.

Gemäß einer weiteren Ausführungsform ist die Breite der Gesamtanordnung kleiner als die halbe Wellenlänge des maximalen Arbeitsfrequenzbereichs der Anordnung. Dies wird, wie bereits oben erläutert, durch das Dielektrikum sowie die Kontaktierung in der H-Ebene, d.h. der schmalen Seite des Rechteckhohlleiters, ermöglicht.

Gemäß einem zweiten Aspekt wird eine Antenne für ein 3D-Radargerät zur Erfassung von Schüttguttopologien bereitgestellt. Die Antenne weist hierbei eine Hohlleiteranordnung wie oben beschrieben auf. Die Antenne kann insbesondere eine Array-Antenne mit Spalten und Reihen sein, wobei ein Array-Element einer Hohlleiteranordnung entspricht. Ein Parameter für die Größe des Arrays ist im mechanischen Aufbau die Breite der Hohlleiteranordnung. Dadurch, dass die Hohlleiteranordnung aufgrund der H-Ebenen Kopplung und des Dielektrikums schmal ausgebildet ist, können die Array-Elemente, d.h. die Hohlleiteranordnungen enger aneinander gereiht werden.

Ein weiterer Aspekt betrifft die Verwendung einer oben und im Folgenden beschriebenen Hohlleiteranordnung in einem Radarmessgerät, insbesondere in einem 3D-Radargerät, oder einem Füllstandradarmessgerät.

### Kurze Beschreibung der Figuren

Im Folgenden werden Ausführungsbeispiele der Erfindung mit Bezug auf die beiliegenden Figuren detailliert beschrieben. Weder die Beschreibung noch die Figuren sollen als die Erfindung einschränkend ausgelegt werden. Hierbei zeigt
Fig. 1 eine Hohlleiteranordnung mit einem Rechteckhohlleiter und einem Rundhohlleiter gemäß einem Ausführungsbeispiel,
Fig. 2 ein Diagramm der Anpassung der Hohlleiteranordnung,
Fig. 3 ein Diagramm der Einfügedämpfung der Hohlleiteranordnung,
Fig. 4 eine Draufsicht der Hohlleiteranordnung gemäß einem Ausführungsbeispiel,
Fig. 5 einen beispielhaften Aufbau mehrerer der Hohlleiteranordnungen gemäß einem Ausführungsbeispiel,
Fig. 6 eine Hohlleiteranordnung mit einem Rechteckhohlleiter und einem Rundhohlleiter gemäß einem Ausführungsbeispiel.

Die Zeichnungen sind lediglich schematisch und nicht maßstabsgetreu.

Grundsätzlich sind identische oder ähnliche Teile mit den gleichen Bezugszeichen versehen.

### Detaillierte Beschreibung der Figuren

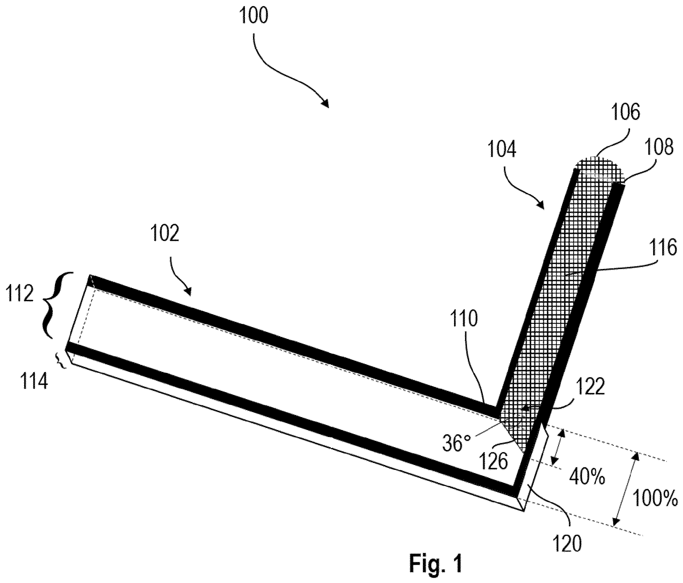

Fig. 1 zeigt eine Hohlleiteranordnung 100 mit einem Rechteckhohlleiter 102 und einem Rundhohlleiter 104 gemäß einem Ausführungsbeispiel. Der Rechteckhohlleiter 102 steht an seinem einen Ende auf einer der schmalen Seiten 114 des Rechteckhohlleiters 102 rechtwinklig zu dem Rundhohlleiter 104. Der Übergang 110 ist hierbei bündig. Der Rundhohlleiter 104 weist eine dielektrische Füllung 116 auf und geht an der Kante 110 bündig in den Rechteckhohlleiter 102 über, wobei ein Teil der dielektrischen Füllung 116 in den Rechteckhohlleiter 102 hineinragt. Der Winkel, der zwischen der Fläche der Öffnung 122 und der Übergangsfläche 126 der Abschrägung des Dielektrikums 116 gebildet wird, beträgt vorteilhafterweise z.B. 36°, so dass das Dielektrikum 116 ca. 40% in Relation zu der breiten Seite 112 des Rechteckhohlleiters 102 in den Rechteckhohlleiter 102 hineinragt.

Am Ausgang des Rundhohlleiters 104 sorgt eine Linse 106 für einen möglichst reflexionsarmen Übergang vom gefüllten Hohlleiter 104 in den freien Raum. Die Linse 106 hat einen Rand 108, der sich auf das Ende des Rundhohlleiters 104 abstützt und somit eine exakte Eindringtiefe der dielektrischen Füllung 116 in den Rechteckhohlleiter 102 definiert.

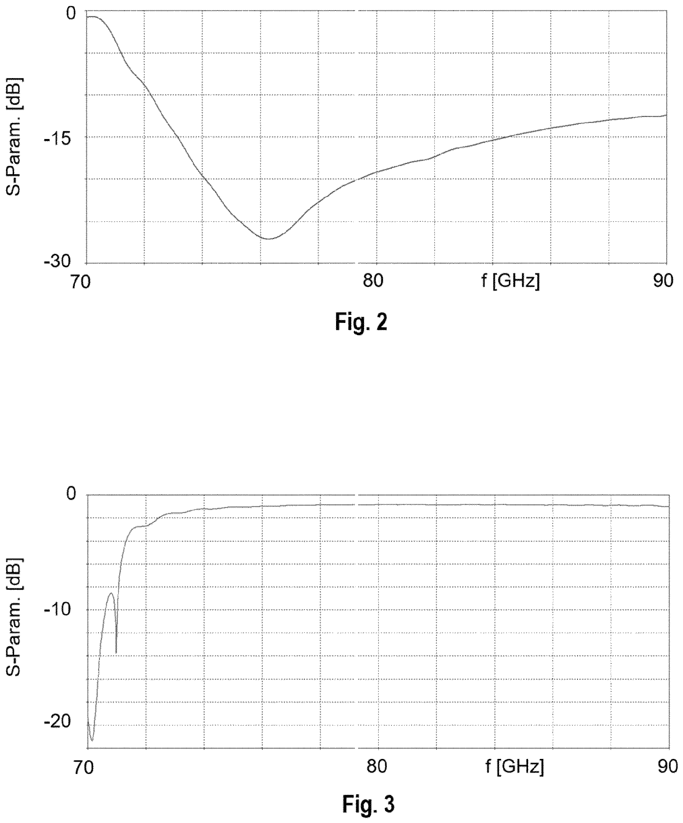

Fig. 2 zeigt ein Diagramm der Anpassung des Übergangs vom Rechteckhohlleiter 102 zum Rundhohlleiter 104, das heißt wie viel Energie der elektromagnetischen Welle von der beschriebenen Anordnung 100 aus Rechteckhohlleiter 102 und Rundhohlleiter 104 zurück reflektiert wird. Wie in Fig. 2 zu erkennen, beträgt diese im Bereich zwischen 73 GHz und 85 GHz weniger als -15 dB mit einem Minimum von -27 dB bei 76 GHz.

Fig. 3 zeigt ein Diagramm der Einfügedämpfung der Anordnung 100, welche bei ca. 71,5 GHz 3 dB beträgt und bei ab 74 GHz lediglich ca. 1 dB.

Aus den Figuren 2 und 3 wird somit der Vorteil der vorgestellten Hohlleiteranordnung bezüglich der elektrischen Eigenschaften deutlich. In den folgenden beiden Zeichnungen wird der Vorteil bezüglich des Formfaktors ersichtlich.

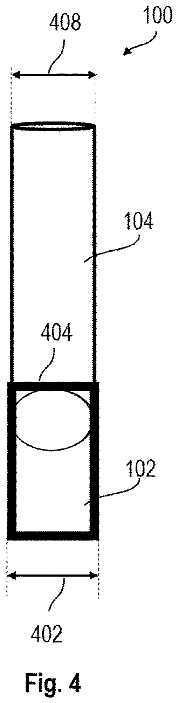

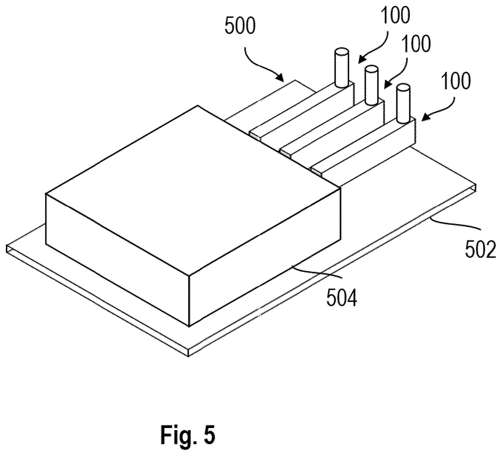

Fig. 4 zeigt eine Draufsicht der Anordnung 100 gemäß einem Ausführungsbeispiel, aus der die Breite 402 der Gesamtanordnung des Rechteckhohlleiters 102 und des Rundhohlleiters 104 ersichtlich ist. Es ist zu erkennen, dass die Breite 408 des Rundhohlleiters 104 etwa so groß ist, wie die schmale Seite 404 des Rechteckhohlleiters 102, wodurch sich mehrere solcher Hohlleiteranordnungen 100 dicht aneinanderreihen lassen, wie in Fig. 5 verdeutlicht wird.

Fig. 5 zeigt beispielhaft einen prinzipiellen Aufbau einer Antenne 500 bzw. eines Antennenarrays 500 auf einer Platine 502, bei dem mehrere der Hohlleiteranordnungen 100 nebeneinanderliegen, und wobei der Vorteil der Hohlleiteranordnung bezüglich der Abmessungen in der Breite eines Arrays 500 zu erkennen ist.

Beispielsweise wird die Verbindung eines ICs bzw. einer Schaltung z.B. in einem Gehäuse 504 mit einem der Hohlleiter 100 hergestellt. Der Rechteckhohlleiter 102 nimmt die Welle ab, welche dann durch diesen in den Rundhohlleiter 104 eindringt und von diesem abgestrahlt wird.

Während in Fig. 5 der Übersichtlichkeit halber lediglich drei eindimensional angeordnete Elemente gezeigt sind, kann ein reales Array weitaus mehr Anordnungen 100, bzw. Elemente 100 in zwei Dimensionen aufweisen, wobei die Elemente z.B. auch versetzt angeordnet sein können, unterschiedliche Längen aufweisen können und dichter gepackt sein können als in Fig. 5 gezeigt.

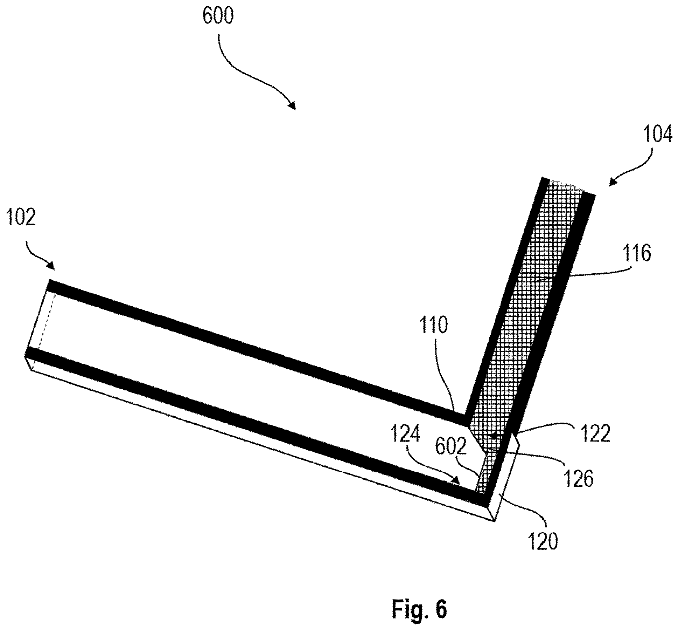

Fig. 6 zeigt eine Hohlleiteranordnung 100 mit einem Rechteckhohlleiter 102 und einem Rundhohlleiter 104 gemäß einem weiteren Ausführungsbeispiel. In diesem Beispiel wird die Eindringtiefe des Dielektrikums 116 anstatt durch den überstehenden Rand 108 einer Linse 106 (s. Fig. 1) nunmehr durch eine Verlängerung 602 des Dielektrikums 116 entlang der Stirnseite 120 des Rechteckhohlleiters 102 bestimmt, so dass das Dielektrikum 116 im montierten Zustand auf der Seite 124 des Rechteckhohlleiters 102 aufsteht, bzw. an diesem anschlägt, die der Öffnung 122 zu dem Rundhohlleiter 104 gegenübersteht. Die abgeschrägte Übergangsfläche 126 bleibt trotz der Verlängerung 602 ausreichend groß, um die Hohlleiterwelle aus dem Rechteckhohlleiter 102 ohne wesentliche zusätzliche Einfügungsdämpfung aufzunehmen.

Durch die Hohlleiteranordnung 100, 600 wird somit ein effektiver Übergang von einem Rechteckhohlleiter 102 zu einem Rundhohleiter 104, die in einem Winkel zueinanderstehen, erreicht. Effektiv heißt in diesem Zusammenhang insbesondere einerseits, dass ein für hochfrequente Signale möglichst breitbandiger und dämpfungsarmer Übergang zwischen den beiden Hohlleitertypen entsteht und andererseits eine platzsparende Anordnung für die Speisung eines Antennenarrays 500 geschaffen wird.

Diese wird durch eine geschickte Gestaltung des in den Rechteckhohlleiter 102 hineinragenden Endes der dielektrischen Füllung 116 erreicht. Diese steht in einem vorteilhaft gewählten Maß in den Rechteckhohlleiter 102 hinein und ist in einem vorteilhaft gewählten Winkel abgeschrägt.

Für den Fachmann ist es selbstverständlich, dass auch andere Variationen möglich sind. Beispielsweise kann der Rechteckhohlleiter 102 in der E-Ebene durch den Rundhohlleiter 104 kontaktiert werden. Hierdurch wird zwar ebenfalls eine geringe Einfügungsdämpfung und eine gute Anpassung durch die abgeschrägte Form der Dielektrikumfüllung erreicht, jedoch müsste in diesem Fall die Kontaktierung an der breiten Seite 112 des Rechteckhohlleiters 104 stattfinden, wodurch die Gesamtbreite 402 der Anordnung deutlich erhöht wird und somit keine platzsparenden Arrays realisiert werden können.

Weiterhin kann die dielektrische Füllung 116 beispielsweise auch ohne Linse 106 realisiert werden, was einerseits eine einfachere und kostengünstigere Herstellung erlaubt, jedoch andererseits wird der positive Effekt bezüglich der Abstrahleigenschaften der elektromagnetischen Welle gegenüber einer Anordnung mit Linse 106 nicht genutzt.

Weiterhin kann der Winkel zwischen Rechteckhohlleiter und Rundhohlleiter einen von 90° abweichenden Winkel aufweisen.

## Patentansprüche

1. Hohlleiteranordnung (100, 600) zum Leiten von elektromagnetischen Wellen, aufweisend
einen Rechteckhohlleiter (102) und
einen Rundhohlleiter (104); wobei
der Rechteckhohlleiter (102) eine seitliche Öffnung in einer schmalen oder einer breiten Seite des Rechteckhohlleiters (102) (122) aufweist und rechtwinklig in den Rundhohlleiter (104) übergeht;
der Rundhohlleiter (104) mit einem Dielektrikum-Material (116) gefüllt ist; **gekennzeichnet dadurch, dass** das Dielektrikum-Material (116) in einem Übergangsabschnitt in einem definierten Winkel abgeschrägt ist, so dass eine Abschrägung mit einer Übergangsfläche (126) gebildet wird, die um den definierten Winkel gegenüber der Fläche der Öffnung (122) inkliniert ist und das Dielektrikum-Material mit der Abschrägung und mit einer definierten Eindringtiefe entlang einer Stirnseite des Rechteckhohlleiters in den Rechteckhohlleiter (102) hineinragt.

2. Hohlleiteranordnung (100, 600) nach Anspruch 1, wobei der Winkel der Abschrägung zwischen 20° und 40° liegt.

3. Hohlleiteranordnung (100, 600) nach Anspruch 1 oder 2, wobei das Dielektrikum-Material (116) an dem Übergangsabschnitt mit dem Rechteckhohlleiter (102) gegenüberliegenden Ende des Rundhohlleiters (104) eine Linse (106) aufweist.

4. Hohlleiteranordnung (100, 600) nach Anspruch 3, wobei die Linse (106) an dem Übergangsabschnitt mit dem Rechteckhohlleiter (102) gegenüberliegendem Ende des Rundhohlleiters (104) einen umfangsseitigen Vorsprung aufweist, an dem das Dielektrikum-Material auf dem Ende des Rundhohlleiters (104) aufsteht und mit dem sich die Linse (106) auf dem Ende des Rundhohlleiters (104) abstützt.

5. Hohlleiteranordnung (100, 600) nach einem der vorhergehenden Ansprüche, wobei das Dielektrikum-Material (116) entlang einer Stirnseite (120) des Rechteckhohlleiters (102) eine Verlängerung (602) aufweist, so dass das Dielektrikum-Material (116) an der der Öffnung (122) am Übergang gegenüberliegenden Seite (124) aufsteht.

6. Hohlleiteranordnung (100, 600) nach einem der vorhergehenden Ansprüche, wobei der Übergang **dadurch gekennzeichnet ist, dass** der Rundhohlleiter (104) auf der schmalen Seite (114) des Rechteckhohlleiters (102) steht.

7. Hohlleiteranordnung (100, 600) nach einem der vorhergehenden Ansprüche, wobei die relative Permittivität des Dielektrikum-Materials (116) zwischen 2 und 15 liegt.

8. Hohlleiteranordnung (100, 600) nach einem der vorhergehenden Ansprüche, wobei das Dielektrikum-Material (116) aus dem Material Polyetheretherketon, PEEK, besteht.

9. Hohlleiteranordnung (100, 600) nach einem der Ansprüche 1 bis 7, wobei das Dielektrikum-Material (116) aus dem Material Polytetrafluorethylen, PTFE, besteht.

10. Hohlleiteranordnung (100) nach einem der vorhergehenden Ansprüche, wobei der Rechteckhohlleiter eine schmale und eine breite Seite aufweist, die Breite (408) des Rundhohlleiters (104) etwa der schmalen Seite des Rechteckhohlleiters entspricht, und wobei die Gesamtbreite (402) der Hohlleiteranordnung (100) kleiner als die halbe Wellenlänge des maximalen Arbeitsfrequenzbereichs der Hohlleiteranordnung (100) ist.

11. Antenne (500) für ein 3D-Radargerät zur Erfassung von Schüttguttopologien, aufweisend eine Hohlleiteranordnung (100) nach einem der Ansprüche 1 bis 10.

12. Verwendung einer Hohlleiteranordnung (100) nach einem der Ansprüche 1 bis 10 in einem Radarmessgerät.

## Claims

1. A waveguide arrangement (100, 600) for guiding electromagnetic waves, comprising
a rectangular waveguide (102) and
a circular waveguide (104); wherein
the rectangular waveguide (102) has a lateral opening (122) in a narrow or wide side of the rectangular waveguide (102) and transitions at right angles into the circular waveguide (104);
the circular waveguide (104) is filled with a dielectric material (116);
**characterised in that** the dielectric material (116) is bevelled at a defined angle in a transition section so that a bevel with a transition surface (126) that is inclined by the defined angle relative to the surface of the opening (122), and the dielectric material with the bevel and with a defined penetration depth protrudes into the rectangular waveguide (102) along an end face of the rectangular waveguide.

2. The waveguide arrangement (100, 600) according to claim 1, wherein the angle of the bevel is between 20° and 40°.

3. The waveguide arrangement (100, 600) according to claim 1 or 2, wherein the dielectric material (116) has a lens (106) at the transition section with the end of the rectangular waveguide (102) opposite the end of the circular waveguide (104).

4. The waveguide arrangement (100, 600) according to claim 3, wherein the lens (106) at the transition section with the end of the circular waveguide (104) opposite the rectangular waveguide (102) has a circumferential projection on which the dielectric material stands up on the end of the circular waveguide (104) and with which the lens (106) is supported on the end of the circular waveguide (104).

5. The waveguide arrangement (100, 600) according to any of the preceding claims, wherein the dielectric material (116) extends along an end face (120) of the rectangular waveguide (102) so that the dielectric material (116) stands up on the side (124) opposite the opening (122) at the transition.

6. The waveguide arrangement (100, 600) according to any of the preceding claims, wherein the transition is **characterised in that** the circular waveguide (104) stands on the narrow side (114) of the rectangular waveguide (102).

7. The waveguide arrangement (100, 600) according to any of the preceding claims, wherein the relative permittivity of the dielectric material (116) is between 2 and 15.

8. The waveguide arrangement (100, 600) according to any of the preceding claims, wherein the dielectric material (116) consists of polyether ether ketone, PEEK.

9. The waveguide arrangement (100, 600) according to any one of claims 1 to 7, wherein the dielectric material (116) consists of the material polytetrafluoroethylene, PTFE.

10. The waveguide arrangement (100) according to any of the preceding claims, wherein the rectangular waveguide has a narrow side and a wide side, the width (408) of the circular waveguide (104) corresponds approximately to the narrow side of the rectangular waveguide, and wherein the total width (402) of the waveguide arrangement (100) is less than half the wavelength of the maximum operating frequency range of the waveguide arrangement (100).

11. An antenna (500) for a 3D radar device for detecting bulk material topologies, comprising a waveguide arrangement (100) according to any one of claims 1 to 10.

12. Use of a waveguide arrangement (100) according to one of claims 1 to 10 in a radar measuring device.

## Revendications

1. Agencement de guide d'ondes (100, 600) destiné à guider des ondes électromagnétiques, présentant :
un guide d'ondes rectangulaire (102) et
un guide d'ondes circulaire (104) ; dans lequel
le guide d'ondes rectangulaire (102) présente une ouverture latérale (122) dans un côté étroit ou large du guide d'ondes rectangulaire (102) et se raccorde à angle droit au guide d'ondes circulaire (104) ;
le guide d'ondes circulaire (104) est rempli d'un matériau diélectrique (116) ;
**caractérisé en ce que**
le matériau diélectrique (116) est biseauté dans une section de transition selon un angle défini, de sorte qu'un biseau ayant une surface de transition (126) inclinée de l'angle défini par rapport à la surface de l'ouverture (122) est formé et que le matériau diélectrique pénètre dans le guide d'ondes rectangulaire (102) avec le biseau et avec une profondeur de pénétration définie le long d'un côté frontal du guide d'ondes rectangulaire.

2. Agencement de guide d'ondes (100, 600) selon la revendication 1, dans lequel l'angle du biseau se situe entre 20° et 40°.

3. Agencement de guide d'ondes (100, 600) selon la revendication 1 ou 2, dans lequel le matériau diélectrique (116) présente une lentille (106) à l'extrémité du guide d'ondes circulaire (104) opposée à la section de transition avec le guide d'ondes rectangulaire (102).

4. Agencement de guide d'ondes (100, 600) selon la revendication 3, dans lequel la lentille (106) présente, à l'extrémité du guide d'ondes circulaire (104) opposée à la section de transition avec le guide d'ondes rectangulaire (102), une saillie périphérique au niveau de laquelle le matériau diélectrique est en appui sur l'extrémité du guide d'ondes circulaire (104) et par laquelle la lentille (106) s'appuie sur l'extrémité du guide d'ondes circulaire (104).

5. Agencement de guide d'ondes (100, 600) selon l'une des revendications précédentes, dans lequel le matériau diélectrique (116) présente le long d'un côté frontal (120) du guide d'ondes rectangulaire (102) un prolongement (602), de sorte que le matériau diélectrique (116) est en appui contre le côté (124) opposé à l'ouverture (122) au niveau de la transition.

6. Agencement de guide d'ondes (100, 600) selon l'une des revendications précédentes, dans lequel la transition est **caractérisée en ce que** le guide d'ondes circulaire (104) se dresse sur le côté étroit (114) du guide d'ondes rectangulaire (102).

7. Agencement de guide d'ondes (100, 600) selon l'une des revendications précédentes, dans lequel la permittivité relative du matériau diélectrique (116) se situe entre 2 et 15.

8. Agencement de guide d'ondes (100, 600) selon l'une des revendications précédentes, dans lequel le matériau diélectrique (116) est constitué du matériau polyétheréthercétone, PEEK.

9. Agencement de guide d'ondes (100, 600) selon l'une des revendications 1 à 7, dans lequel le matériau diélectrique (116) est constitué du matériau polytétrafluoroéthylène, PTFE.

10. Agencement de guide d'ondes (100) selon l'une des revendications précédentes, dans lequel le guide d'ondes rectangulaire présente un côté étroit et un côté large, la largeur (408) du guide d'ondes circulaire (104) correspond approximativement au côté étroit du guide d'ondes rectangulaire, et dans lequel la largeur totale (402) de l'agencement de guide d'ondes (100) est inférieure à la demi-longueur d'onde de la plage de fréquences de travail maximale de l'agencement de guide d'ondes (100).

11. Antenne (500) pour un radar 3D destiné à détecter des topologies de matières en vrac, présentant un agencement de guide d'ondes (100) selon l'une des revendications 1 à 10.

12. Utilisation d'un agencement de guide d'ondes (100) selon l'une des revendications 1 à 10 dans un appareil de mesure radar.
